# EUROPÄISCHE PATENTSCHRIFT

(11) **EP 4 309 241 B1**
(45) Veröffentlichungstag und Bekanntmachung des Hinweises auf die Patenterteilung: **24.09.2025**
(21) Anmeldenummer: 22714178.5
(22) Anmeldetag: 14.03.2022
(51) Int. Cl.: H01Q 1/28, H01Q 1/12, H01Q 1/42

(54) **ANTENNENVERKLEIDUNG FÜR FLUGZEUGE**
ANTENNA CLADDING FOR AIRCRAFT
GAINE D'ANTENNE POUR AÉRONEF

(30) Priorität: 16.03.2021 DE 102021106321
(43) Veröffentlichungstag der Anmeldung: 24.01.2024
(73) Patentinhaber: Lufthansa Technik AG, 22335 Hamburg (DE)
(72) Erfinder: ADUGNA, Tobias, 22850 Norderstedt (DE); STROTMANN, Arno, 22453 Hamburg (DE); EXNER, Matthias, 22303 Hamburg (DE)
(74) Vertreter: Glawe, Delfs, Moll
(86) Internationale Anmeldenummer: PCT/EP2022/056431
(87) Internationale Veröffentlichungsnummer: WO 2022/194725

(56) Entgegenhaltungen:
- US-A1- 2016 190 675
- US-A1- 2017 373 383
- US-A1- 2019 023 371
- US-A1- 2019 305 408
- ANONYMOUS: "Astronics Unveils AeroShield, a Low Drag Radome and Composite Adapter Plate - APEX", 30 September 2015 (2015-09-30), pages 1 - 5, XP055934138, Retrieved from the Internet <URL:https://apex.aero/articles/astronics-unveils-aeroshield-a-low-drag-radome-and-composite-adapter-plate/> [retrieved on 20220622]

## Beschreibung

Die Erfindung betrifft eine Antennenverkleidung für Flugzeuge, insbesondere Verkehrsflugzeuge.

Für Kommunikationszwecke weisen Verkehrsflugzeuge regelmäßig an der Oberseite des Rumpfes angeordnete Antennen auf, mit denen eine Verbindung zu im Orbit befindlichen Kommunikationssatelliten als Relais-Stationen aufgebaut werden kann, über die beliebige Kommunikationsanwendungen, wie bspw. Telefonie, Internetzugang oder Fernsehempfang realisiert werden können. Damit eine entsprechende Kommunikation zuverlässig möglich ist, sind die Antennen, die häufig als Transceiver für das Ka- und/oder Ku-Band ausgebildet sind, auf der Außenseite des Rumpfes angeordnet.

Um die empfindlichen Antennen vor äußeren Einflüssen zu schützen, aber auch um die Aerodynamik des Flugzeuges möglichst wenig zu beeinträchtigen, sind weiterhin strömungsoptimierte Antennenabdeckungen bekannt, die zumindest in den Bereichen mit Durchgang von elektromagnetischer Strahlung von und zu den Antennen als für Funkwellen durchlässiges bzw. nur eine geringe Dämpfung aufweisendes Radom ausgebildet sind.

Im Stand der Technik ist etabliert und u.a**.** auch durch Industriestandards, wie bspw. die durch das Airlines Electronic Engineering Committee (AEEC) herausgegebenen Normen ARINC 791 und ARINC 792, vorgegeben, dass zur Befestigung von Kommunikationsantennen an der Außenseite eines Flugzeugrumpfes nur einige wenige Beschläge vorzusehen sind. Dadurch wird die Integrität der Flugzeugstruktur wenig beeinträchtigt und insbesondere auch die Nachrüstung entsprechender Antennen möglich. An diesen Beschlägen wird dann eine Trägerstruktur befestigt, auf der die eigentlichen Antennen montiert werden. An der Trägerstruktur wird außerdem eine aerodynamisch optimierte Radomverkleidung befestigt, die mit dem Flugzeugrumpf abschließt und die auf der Trägerstruktur montierte Antennen vor äußeren Einflüssen schützen. Die Radomverkleidung ist dabei in der Regel nicht selbstständig formstabil, sondern behält ihre vorgesehene Formgebung nur bei, wenn sie in ausreichend engen Abständen über ihren gesamten Umfang mit der Trägerstruktur verbunden ist. Die Trägerstruktur muss also nicht nur die Antennenmodule tragen, sondern gleichzeitig auch noch den in Zusammenhang mit der Beibehaltung der Form der Radomverkleidung auftretenden Belastungen aufnehmen.

Die Trägerstruktur bekannter "klassischer" Antennenverkleidung für die Anbringung an der Oberseite eines Flugzeugrumpfes ist dabei regelmäßig aus Aluminium, aus Gründen des Leichtbaus häufig aus dem Vollen zu einer Gitterstruktur gefräst. Auf der Oberseite der Trägerstruktur sind diverse Verbindungspunkte für die Montage unterschiedlicher Antennenmodule vorgesehen. Auf der Unterseite sind Beschläge befestigt, mit denen die Trägerstruktur an den flugzeugseitigen Beschlägen befestigt werden kann.

Aufgrund der Anordnung der Beschläge auf der Unterseite der Trägerstruktur ragen entsprechende klassische Antennenverkleidungen derart weit über die Außenhaut des Flugzeuges, an welchem sie angebracht sind, hinaus, dass auch auf der Oberseite des Rumpfes die Gefahr von Vogelschlag beim Flug durch niedrigere Luftschichten bzw. bei Start- und Landung besteht. Klassische Antennenverkleidungen sind daher auf Vogelschlag zu prüfen und entsprechend stabil auszuführen, was regelmäßig ein hohes Gewicht bedeutet.

Weiterhin sind aus dem Stand der Technik Antennenverkleidungen bekannt, bei denen die Beschläge zur Anbindung an flugzeugseitige Beschläge auf der Oberseite der Trägerstruktur angeordnet sind, sodass die flugzeugseitigen Beschläge für die Befestigung durch die Trägerstruktur hindurchgeführt werden. Die Trägerstruktur liegt dann näher an der Außenseite des Flugzeugrumpfes, womit so ausgebildete Antennenverkleidungen deutlich weniger weit über die Außenhaut des Flugzeuges hervorstehen als bspw. die klassischen Antennenverkleidungen. Teilweise ist die Höhe solcher Antennenverkleidungen derart gering, dass ein Vogelschlag praktisch ausgeschlossen ist, sodass, bei geeigneten Nachweisen, dass ein direktes Auftreffen eines Vogels äußerst unwahrscheinlich ist, Nachweispflichten zur strukturellen Integrität für ein solches Szenario regelmäßig entfallen.

Allerdings sind entsprechende Antennenverkleidungen aufgrund der auf der Oberseite der Trägerstruktur hervorstehenden Beschläge kaum flexibel im Hinblick auf daran montierbare Antennenmodule. In der Folge werden entsprechende Antennenverkleidungen jeweils nur auf bestimmte Antennenmodule ausgelegt. Ein späterer Austausch eines Antennenmoduls ist somit nicht immer möglich und erfordert ggf. eine vollständig neue Antennenverkleidung.

Das Dokument US 2016/190675 A1 beschreibt eine Antennenverkleidung zur Befestigung an einem Flugzeug, die eine Adapterplatte mit einer Rumpf-Schürze umfasst, an deren oberem Ende eine Radom-Abdeckung angeordnet ist. Es sind Verbindungsöffnungen für Verbindungsbeschläge vorgesehen, die zwischen der Oberseite und der Unterseite der Adapterplatte angeordnet sind.

In dem Dokument Anonymous: "Astronics Unveils AeroShield, a Low Drag Radome and Composite Adapter Plate - APEX" wird ein tropfenförmiges Radom mit einer ARINC-791-konformen Adapterplatte aus Kohlefaserverbundmaterial vorgestellt.

Das Dokument US 2017/373383 A1 betrifft ein Antennensystem eines Flugzeugs, mit einem Radom und einer Adapterplatte sowie einer gekrümmten Rumpf-Schürze.

Das Dokument US 2019/023371 A1 beschreibt ein System zur Befestigung von Antennenanlagen an der Oberfläche eines Flugzeugs, bei dem Verbindungselemente aus Edelstahl ausgebildet sind.

Aufgabe der vorliegenden Erfindung ist, eine Antennenverkleidung für Flugzeuge, insbesondere Verkehrsflugzeuge zu schaffen, bei der die aus dem Stand der Technik bekannten Nachteile nicht mehr oder nur noch in vermindertem Umfang auftreten.

Gelöst wird diese Aufgabe durch eine Antennenverkleidung gemäß den unabhängigen Ansprüchen. Vorteilhafte Weiterbildungen sind Gegenstand der abhängigen Ansprüche.

Demnach betrifft die Erfindung eine Antennenverkleidung für Flugzeuge, insbesondere für Verkehrsflugzeuge, zur Befestigung an von der Außenhaut eines Flugzeuges hervorstehenden Rumpfbeschlägen umfassend ein Trägerelement zur Befestigung von Antennenmodulen daran, eine an dem Trägerelement befestigte Radom-Rumpfverkleidung zur Anlage an der Außenhaut des Flugzeugs und eine mit der Radom-Rumpfverkleidung eine durchgängige Verkleidung bildende, für elektromagnetische Strahlung in einem vorgegebenen Wellenlängenbereich durchlässige Radom-Abdeckung, wobei das Trägerelement eine Adapterplatte aus Faserverbund ist, welche mit Einsätzen versehene Aussparungen aufweist, wobei in den Einsätzen zur Verbindung mit den Rumpfbeschlägen ausgebildete Verbindungsbeschlägen vorgesehen sind, die zwischen der Ober- und Unterseite der Adapterplatte angeordnet und derart ausgebildet sind, dass die Verbindungsbeschläge nicht über die Oberseite der Adapterplatte hinausragen und die Rumpfbeschläge bei Verbindung mit den Verbindungsbeschlägen in die Adapterplatte hinein-, jedoch nicht über deren Oberseite hinausragen, wobei die Radom-Rumpfverkleidung an zwei gegenüberliegenden Enden kuppelförmig und in den dazwischenliegenden Bereichen ausreichend gekrümmt ausgestaltet ist, dass die Radom-Rumpfverkleidung selbstständig formstabil ist, wobei die Radom-Rumpfverkleidung mit Winkelelementen an der Adapterplatte befestigt ist, und wobei jeweils der eine Schenkel eines Winkelelementes mit der Radom-Rumpfverkleidung und der andere Schenkel mit der Adapterplatte verbunden ist.

Die Erfindung betrifft ferner eine Antennenverkleidung für Flugzeuge, insbesondere für Verkehrsflugzeuge, zur Befestigung an von der Außenhaut eines Flugzeuges hervorstehenden Rumpfbeschlägen umfassend ein Trägerelement zur Befestigung von Antennenmodulen daran, eine an dem Trägerelement befestigte Radom-Rumpfverkleidung zur Anlage an der Außenhaut des Flugzeugs und eine mit der Radom-Rumpfverkleidung eine durchgängige Verkleidung bildende, für elektromagnetische Strahlung in einem vorgegebenen Wellenlängenbereich durchlässige Radom-Abdeckung, wobei das Trägerelement eine Adapterplatte aus Faserverbund ist, welche mit Einsätzen versehene Aussparungen aufweist, wobei in den Einsätzen zur Verbindung mit den Rumpfbeschlägen ausgebildete Verbindungsbeschläge vorgesehen sind, die zwischen der Ober- und Unterseite der Adapterplatte angeordnet und derart ausgebildet sind, dass die Verbindungsbeschläge nicht über die Oberseite der Adapterplatte hinausragen und die Rumpfbeschläge bei Verbindung mit den Verbindungsbeschlägen in die Adapterplatte hinein-, jedoch nicht über deren Oberseite hinausragen, und wobei auf der Adapterplatte ein oder mehrere Versteifungselemente angeordnet sind, welche die Adapterplatte versteifen und die Radom-Abdeckung abstützen.

Zunächst werden einige in Zusammenhang mit der Erfindung verwendete Begriffe erläutert.

Ein Beschlag ist in eine Platte "hineinragend", wenn der Beschlag die Ebene einer der beiden Seiten der Platte durchstößt. Er ist "nicht über eine Seite hinausragend", wenn der in die Platte hineinragende Beschlag die durch die fragliche Seite gebildete Ebene nicht durchstößt. Für die vorliegende Erfindung bedeutet dies, dass der Beschlag zwar die durch die Unterseite der Adapterplatte vorgegebenen Ebene durchstößt, nicht jedoch die Ebene, die durch deren Oberseite vorgegeben wird.

Ein Bauteil ist "selbstständig formstabil", wenn es sich bei Anheben des Bauteils an einem beliebigen singulären Punkt aufgrund seines Eigengewichtes praktisch nicht verformt. Ein entsprechendes Bauteil behält damit unabhängig von seiner Befestigung seine Form bei, sodass über die Befestigung lediglich Gewichtskräfte und andere ggf. auf das Bauteil externe Kräfte abgeleitet werden müssen, aber keine dauerhaften Belastungen auftreten, die zum Erhalt der Form des Bauteils erforderlich sind.

Die Erfindung hat erkannt, dass sich durch Ausgestaltung des Trägerelementes als Adapterplatte aus Faserverbund eine Antennenverkleidung ermöglicht wird, die eine deutlich geringere Höhe als eine klassische Antennenverkleidung (bei identischen Antennenmodulen) ermöglicht und gleichzeitig eine größere Flexibilität im Hinblick auf die zu verwendenden Antennenmodulen bietet als die aus dem Stand der Technik hinsichtlich der Bauhöhe optimierten Antennenverkleidungen.

Die niedrigere Bauhöhe gegenüber klassische Antennenverkleidung wird erreicht, indem die von der Außenhaut eines Flugzeuges hervorstehenden Rumpfbeschläge in die Adapterplatte hineingeführt sind, womit der Abstand zwischen der Außenhaut eines Flugzeuges oder der Oberseite der Adapterplatte gegenüber einer Befestigung an der Unterseite der Adapterplatte reduziert werden kann. Die Schaffung der dafür erforderlichen Ausnehmungen in der Faserverbund-Adapterplatte sind problemlos möglich, wobei sich gezeigt hat, dass die Ausnehmungen problemlos an unterschiedlichen Stellen der Adapterplatte angeordnet werden können, sodass eine Adapterplatte während ihrer Herstellung grundsätzlich flexibel an eine bereits vorhandene Anordnung von Rumpfbeschlägen angepasst werden kann.

Das Vorsehen von Einsätzen in Ausnehmungen in Faserverbund-Platten ist ebenfalls grundsätzlich bekannt. Durch entsprechende Einsätze wird die Faserverbund-Platte am Rand der Ausnehmung vor Beschädigung durch in der Ausnehmung angeordnete Komponenten geschützt. Ein entsprechender Einsatz weist in der Regel eine durchgehende Wand zur Abdeckung der Flanken der Ausnehmung sowie einen Bund bzw. einen Flansch auf, mit dem der Einsatz (vergleichbar einer Bund-Bohrbuchse nach DIN 172) an einer Seite der Platte anliegt und so in der Ausnehmung positioniert wird. Die Einsätze können weiterhin beliebig zur Anbindung weiterer Komponenten, wie im vorliegenden Fall den Verbindungsbeschlägen, ausgebildet sein.

Im vorliegenden Fall sind in den Einsätzen Verbindungsbeschläge zur Verbindung mit den Rumpfbeschlägen vorgesehen. Mithilfe dieser Verbindungsbeschläge erfolgt die eigentliche Verbindung mit den Rumpfbeschlägen, wobei die Ausgestaltung der Verbindungsbeschläge maßgeblich durch die Rumpfbeschläge vorgegebenen wird. Unabhängig von der letztendlichen Ausgestaltung der Verbindung zwischen einem Verbindungsbeschlag und einem Rumpfbeschlag, sind die Verbindungsbeschläge aber so ausgestaltet, dass sich im in einem Einsatz in der Adapterplatte eingesetzten Zustand zwischen der Ober- und Unterseite der Adapterplatte angeordnet sind und nicht über deren Oberseite herausragen. Vorzugsweise ragen die Verbindungsbeschläge auch nicht über die Unterseite heraus.

Weiterhin sind die Verbindungsbeschläge so auszuführen, dass die Rumpfbeschläge bei Verbindung mit den Verbindungsbeschlägen zwar, wie beschrieben in die Adapterplatte hineinragen, was aufgrund der innen liegenden Verbindungselemente zwangsläufig ist, gleichzeitig jedoch nicht über die Oberseite der Adapterplatte hinausragen. Untersuchungen haben gezeigt, dass entsprechendes durch geeignete Ausgestaltung der Verbindungsbeschläge für einen Großteil bekannter Rumpfbeschläge, insbesondere solche gemäß den Normen ARINC 791 bzw. 792, ohne Weiteres möglich ist. Antennenverkleidung, die an solchen Rumpfbeschlägen befestigen, für die keine sämtliche erfindungsgemä-ßen Vorgaben erfüllenden Verbindungselemente geschaffen werden können, können jedoch nicht erfindungsgemäß ausgeführt werden.

Durch die erfindungsgemäße Anordnung und Ausgestaltung der Verbindungselemente kann die Oberseite der Adapterplatte grundsätzlich frei von daraus hervorstehenden Elementen ausgebildet sein, was eine weitgehend flexible Anordnung von Antennenmodulen auf der Adapterplatte ermöglicht. Indem das Trägerelement als Adapterplatte ausgeführt ist, ist es auch möglich, an beliebigen Stellen der Adapterplatte Befestigungspunkte für Antennenmodule vorzusehen, was ebenfalls eine erhöhte Flexibilität hinsichtlich der verwendeten Antennenmodule gegenüber gitterartigen Tragelementen aus Aluminium mit fest vorgegebenen Befestigungspunkten bedeutet. Es ist - bei entsprechender Prüfung der Tragfähigkeit der Adapterplatte - sogar möglich, nachträglich Befestigungspunkte in eine bereits in Verwendung befindlichen Adapterplatte einzubringen, um so auch Antennenmodule montieren zu können, für die bei der initialen Herstellung der Adapterplatte noch keine geeigneten Befestigungspunkte vorgesehen waren.

Es ist bevorzugt, wenn wenigstens ein Verbindungsbeschlag wenigstens einen Freiheitsgrad gegenüber dem jeweils zugeordneten Rumpfbeschlag in der Ebene der Adapterplatte aufweist. Der wenigstens eine Freiheitsgrad kann dabei vorzugsweise definiert begrenzt und/oder wahlweise fixierbar sein. Durch einen, vorzugsweise zwei entsprechende Freiheitsgrade können Relativbewegungen der Rumpfbeschläge gegenüber der Adapterplatte in Richtung der Freiheitsgrade und im Rahmen der vorzugsweise vorgesehenen Begrenzung der Freiheitsgrade ermöglich werden, womit aufgrund von nahezu zwangsläufigen Verformungen der Außenhülle eines Flugzeugs mit Druckkabine während des Flugs einhergehende relative Verschiebung der einzelnen Rumpfbeschläge zueinander spannungsfrei ausgeglichen werden können. Ist ein Verbindungsbeschlag darüber hinaus während der Montage noch in einem oder mehreren Freiheitsgraden über die ansonsten ggf. vorgesehenen Beschränkungen hinaus beweglich, lassen sich auch evtl. Toleranzen in der Anordnung der Rumpfbeschläge ausgleichen. Nach der Verbindung mit den Rumpfbeschlägen können die Freiheitsgrade der Verbindungsbeschläge geeignet fixiert werden, sodass der Freiheitsgrad, wie zuvor erläutert, definiert begrenzt ist.

Es ist bevorzugt, wenn wenigstens ein Verbindungsbeschlag zur beidseitigen Befestigung eines durch den zugeordneten Rumpfbeschlag hindurchgeführten Bolzen ausgebildet ist, wobei die beidseitige Befestigung vorzugsweise einen Freiheitsgrad in eine Richtung senkrecht zu einem damit fixierten Bolzen in der Ebene der Adapterplatte aufweist. Bei ausreichendem Abstand zwischen der beidseitigen Befestigung kann ein erster Freiheitsgrad in Richtung des durch den zugeordneten Rumpfbeschlag hindurchgeführten Bolzens erreicht werden, der durch den fraglichen Abstand definiert begrenzt ist. Ist dieser Bolzen weiterhin in eine Richtung senkrecht zu seiner Längsachse verschieblich gelagert, ist ein zweiter Freiheitsgrad gegeben, der durch entsprechende Anschläge und/oder den Einsatz, in dem das Verbindungselement angeordnet ist, definiert begrenzt sein kann.

Insbesondere bei einer solchen Ausgestaltung eines Verbindungsbeschlags ist es vorteilhaft, wenn die Aussparung und/oder der zur Aufnahme eines Verbindungselementes vorgesehene Freiraum eines Einsatzes rechteckförmig ist.

In einer erfindungsgemäßen Ausführungsform ist die Radom-Rumpfverkleidung an zwei gegenüberliegenden Enden kuppelförmig und in den dazwischenliegenden Bereichen ausreichend gekrümmt ausgestaltet, dass die Radom-Rumpfverkleidung selbstständig formstabil ist. Durch eine entsprechende Ausgestaltung der Radom-Rumpfverkleidung werden die auf die Trägerplatte einwirkenden Belastungen reduziert, da insbesondere die von bekannten Antennenverkleidungen bekannten Belastungen zum Erhalt der Form der Abdeckung grundsätzlich wegfallen.

Bei dieser erfindungsgemäßen Ausführungsform einer selbstständig formstabilen Radom-Rumpfverkleidung ist es ausreichend, dass diese mit Winkelelementen an der Adapterplatte befestigt ist, wobei jeweils der eine Schenkel eines Winkelelementes mit der Radom-Rumpfverkleidung und der andere Schenkel mit der Adapterplatte verbunden ist.

Die einzelnen Winkelelemente können dabei zum Ausgleich von Fertigungs- und/oder Montagetoleranzen anpassbar sein. Dazu können für jede Position, an der ein Winkelelement vorzusehen ist, jeweils passende Winkelelemente aus einem Satz verschieden ausgestalteter Winkelelemente ausgewählt werden. Alternativ ist es möglich, die einzelnen Winkelelemente bei der Montage variabel anpassbar auszugestalten, bspw. indem Bolzendurchführungsöffnungen erst bei der Montage hergestellt werden. Die Winkelelemente können so individuell an ihre jeweilige Position angepasst werden.

An der selbstständig formstabilen Radom-Rumpfverkleidung wird die eigentliche Radom-Abdeckung befestigt. Diese ist - im Gegensatz zur Radom-Rumpfverkleidung - zwingend in einem letztendlich durch die verwendeten Antennenmodule vorgegebenen Wellenlängenbereich durchlässig für elektromagnetische Strahlung und bildet zusammen mit der Radom-Rumpfverkleidung die durchgängige Verkleidung für die Antennenmodule. In anderen Worten weist die Radom-Rumpfverkleidung eine Öffnung auf, welche durch die Radom-Abdeckung verschlossen wird. Die Radom-Abdeckung kann dabei auch mehrteilig, bspw. zum Verschließen von mehreren, voneinander getrennten Öffnungen in der Radom-Rumpfverkleidung ausgebildet sein.

Die Radom-Abdeckung muss, anders als die Radom-Rumpfverkleidung, nicht selbstständig formstabil sein, was eine für die Durchlässigkeit von elektromagnetischer Strahlung günstige geringe Wandstärke ermöglicht. In diesem Fall wird die Formgebung der Radom-Abdeckung durch eine geeignete Verbindung mit der Radom-Rumpfverkleidung erreicht.

Bei einer geringen Wandstärke besteht jedoch das Risiko, dass die Radom-Abdeckung während des Fluges beginnt aeroelastisch zu schwingen oder zu flattern. Um dieses Risiko zu reduzieren, sind in einer weiteren erfindungsgemäßen Ausführungsform auf der Adapterplatte ein oder mehrere Versteifungselemente angeordnet, welche die Radom-Abdeckung abstützen. Die Versteifungselemente sind so ausgestaltet, bspw. als Versteifungsrippe, dass auch die Adapterplatte selbst versteift wird. Die Versteifungselemente sind vorzugsweise lösbar an die Adapterplatte angebunden, um die Flexibilität hinsichtlich der einsetzbaren Antennenmodule nicht zu beeinträchtigen. Nach Auswahl des oder der letztendlich einzusetzenden Antennenmodule kann das wenigstens eine Versteifungselement an freien Stellen der Adapterplatte angeordnet mit dieser lösbar oder stoffschlüssig verbunden werden.

Die Antennenverkleidung kann eine Länge von 2,5 bis 3,0 m, vorzugsweise von 2,7, bis 2,9 m, weiter vorzugsweise von 2,8 m und/oder eine Breite von 0,7 bis 1,5 m, vorzugsweise von 0,9 bis 1,3 m, weiter vorzugsweise von 1,1 m aufweisen. Die Höhe der Antennenverkleidung (ausgehend von der Außenhaut des Flugzeuges, auf dem sie angeordnet ist) beträgt dabei vorzugsweise weniger als 30 cm, vorzugsweise weniger als 25 cm, weiter vorzugsweise weniger als 22 cm. Diese geringen Höhen können durch die Ausgestaltung der Antennenverkleidung erreicht werden und reduzieren dabei das Risiko für Vogelschlag derart bzw. schließen Entsprechendes praktisch aus, dass Nachweise für das Standhalten eines Vogelschlags regelmäßig nicht erforderlich sind. Gleichzeitig gestatten sie den Einbau von verschiedensten Antennenmodulen.

Die Position der Ausnehmung und/oder die Ausgestaltung der Verbindungsbeschläge ist vorzugsweise derart, dass sich die Adapterplatte zur Anbindung an Rumpfbeschläge gemäß einer der Normen ARINC 791 oder ARINC 792 eignet.

Bei der Adapterplatte handelt es sich bevorzugt um eine Faserverbund-Platte in Sandwichbauweise, vorzugsweise mit Kohlenstofffaser-Epoxid-Deckschichten und/oder einem Schaumkern. Es sind selbstverständlich auch Varianten mit Thermoplast- und/oder Wabenkern möglich. Die Einsätze und/oder Winkelelemente sind vorzugsweise aus korrosionsbeständigem Edelstahl oder Aluminium und/oder durch Bolzen an der Adapterplatte gesichert befestigt.

Die Erfindung wird nun anhand einer vorteilhaften Ausführungsform unter Bezugnahme auf die beigefügten Zeichnungen beispielhaft beschrieben. Es zeigen:
- Figur 1:: ein Ausführungsbeispiel einer erfindungsgemäßen Antennenverkleidung für Flugzeuge;
- Figur 2:: die Antennenverkleidung aus Figur 1 mit entfernter Radom-Abdeckung;
- Figur 3:: die Antennenverkleidung aus Figur 2 mit entfernten Antennenmodulen;
- Figur 4:: die Adapterplatte der Antennenverkleidung gemäß den vorstehenden Figuren;
- Figur 5:: eine Detailansicht zu Figur 4; und
- Figur 6:: eine Schnittansicht zu Figur 4.

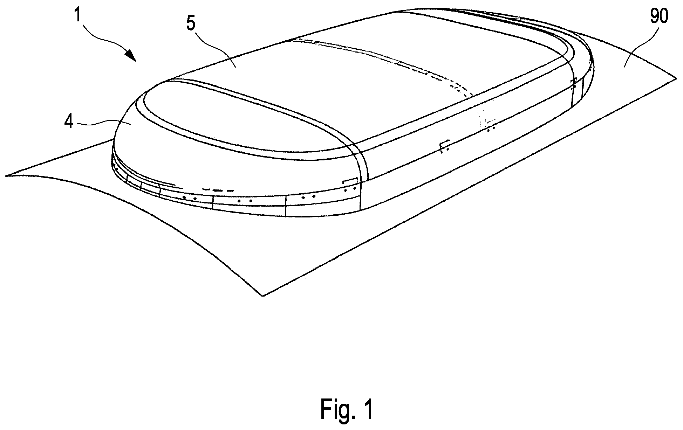

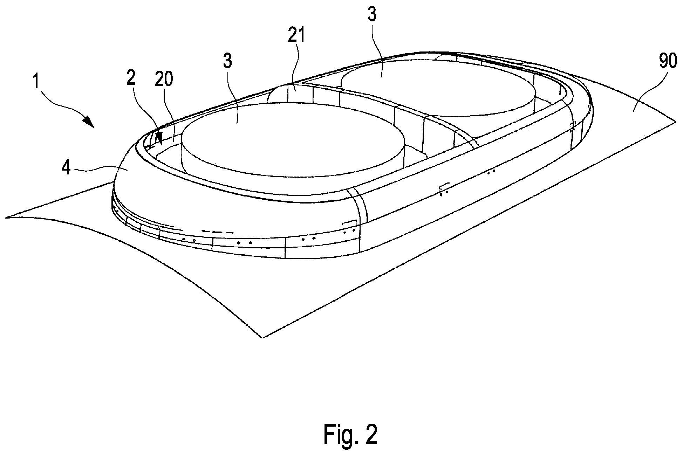

In Figuren 1 bis 3 ist jeweils eine Antennenverkleidung 1 für Flugzeuge gezeigt, wobei ausgehend von Figur 1 in den nachfolgenden Figuren jeweils einzelne Komponenten der Antennenverkleidung 1 oder anderer Bauteile weggelassen sind, um die jeweils darunterliegenden Bauteile zu zeigen.

Die Antennenverkleidung 1 ist auf der Außenhaut 90 eines Flugzeugrumpfes eines Verkehrsflugzeugs, wie sie in Figuren 1 bis 3 angedeutet ist, befestigt. Auf der Außenhaut 90 sind dazu Rumpfbeschläge gemäß der Norm ARINC 791 vorgesehen.

Die Antennenverkleidung 1 umfasst ein Trägerelement 2 zur Befestigung von Antennenmodulen 3 daran, eine an dem Trägerelement 2 befestigte Radom-Rumpfverkleidung 4 zur Anlage an der Außenhaut 90 des Flugzeugs und eine mit der Radom-Rumpfverkleidung 4 eine durchgängige Verkleidung bildende, für elektromagnetische Strahlung in einem vorgegebenen Wellenlängenbereich durchlässige Radom-Abdeckung 5.

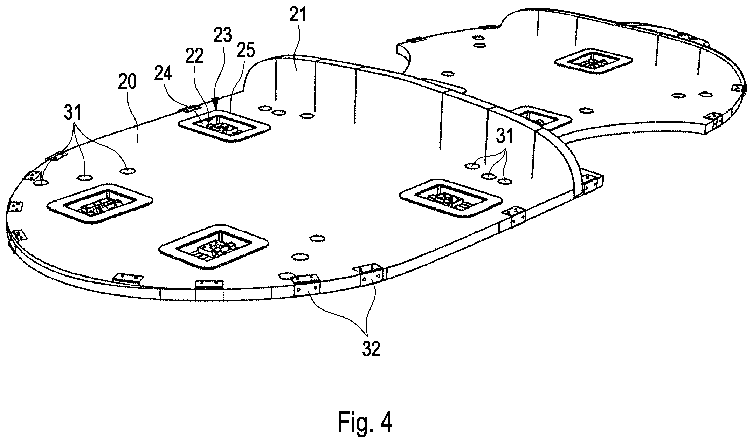

Bei dem Trägerelement 2 der Antennenverkleidung handelt es sich um eine Adapterplatte 20 aus Faserverbund-Material in Sandwichbauweise, wobei die Deckschichten aus einem Kohlenstofffaser-Epoxid-Material bestehen, zwischen denen ein Schaumkern angeordnet ist. Auf der Oberseite der Adapterplatte 20 ist ein als Verstärkungsrippe ausgebildetes Verstärkungselement 21 angeordnet und stoffschlüssig mit dieser verbunden. Die Adapterplatte 20 ist in Figur 4 isoliert im Detail dargestellt.

In der Adapterplatte 20 sind an den Positionen, an denen jeweils eine Verbindung mit einem am Flugzeug gemäß der Norm ARINC 791 angeordneten Rumpfbeschlag vorgesehen ist, im Wesentlichen rechteckförmige Aussparungen 22 vorgesehen, die mit ebenfalls im wesentlichen rechteckigen Einsätzen 23 aus korrosionsbeständigem Edelstahl versehen sind. Die Einsätze 23 weisen jeweils eine die Randfläche der Aussparung 22 vollständig abdeckende Wand 24 mit einem umlaufenden Bund 25 auf, der auf der Oberseite der Adapterplatte 20 anliegt, womit sich die Einsätze 23 nur kaum über die Oberseite der Adapterplatte 20 erheben. Die Einsätze 23 können stoffschlüssig oder aber durch Bolzenverbindungen (nicht dargestellt) fest mit der Adapterplatte 20 verbunden sein.

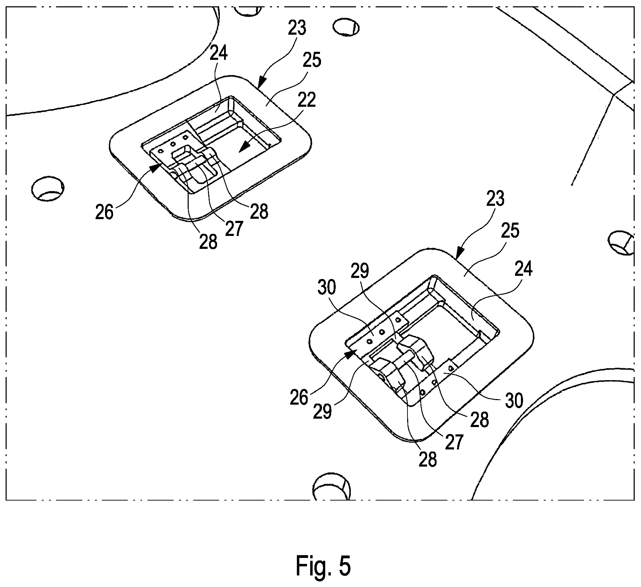

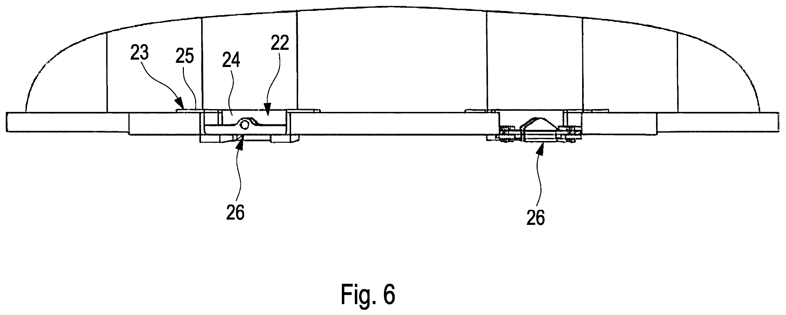

In den Einsätzen 23 sind Verbindungsbeschläge 26 aus korrosionsbeständigem Edelstahl zur Verbindung mit Rumpfbeschlägen gemäß der Norm ARINC 791 vorgesehen, die in Figur 5 in größerem Detail und in Figur 6 in einer Schnittansicht parallel zum Verstärkungselement 21 durch die in Figur 5 gezeigten Verbindungsbeschläge 26 gezeigt sind.

Die Verbindungsbeschläge 26 umfassen jeweils einen, im montierten Zustand beidseitig befestigten Bolzen 27, der bei der Montage auch durch die dafür vorgesehene Öffnung in einem Rumpfbeschlag gemäß der Norm ARINC 791 geführt wird, wozu der Bolzen 27 zeitweise gelöst werden kann. Die beiden Befestigungen 28 für den Bolzen 27 weisen dabei einen solchen Abstand auf, dass sich der ARINC-791-konforme Rumpfbeschlag, durch den der Bolzen 27 geführt ist, in Richtung den Bolzens 27 bewegen kann, womit sich ein durch den Abstand der beiden Befestigungen 28 definiert begrenzter Freiheitsgrad in der Ebene der Adapterplatte 20 ergibt.

Darüber hinaus lassen sich die Verbindungsbeschläge 26 jeweils als Ganzes innerhalb des jeweiligen Einsatzes 23 in Richtung des genannten Freiheitsgrades verschieben und in einer gewünschten Position, bspw. durch Verschraubung, gegenüber dem Einsatz 23 fixieren. Ein Verbindungsbeschlag 26 kann so während der Montage in seiner Position entlang des genannten Freiheitsgrades an die tatsächliche Position des Rumpfbeschlages, mit dem er verbunden werden soll, angepasst werden, um evtl. Fertigungstoleranzen auszugleichen. Nach der Fixierung des Verbindungsbeschlages 26 ist dieser Freiheitsgrad aber wieder durch den Abstand der beiden Befestigungen 28 definiert begrenzt.

Bei einem Teil der Verbindungsbeschläge 26 sind die Befestigungen 28 für den Bolzen 27 in eine Richtung senkrecht zum Bolzen 27 verschieblich auf Gleitschienen 29 gelagert, die wiederum durch geeignete Elemente 30 an einem Einsatz 23 in einer beliebigen Position in Richtung des Bolzens 27 befestigbar sind. Es ergibt sich so ein zweiter, definiert begrenzter Freiheitsgrad in der Ebene der Adapterplatte 20 für die Verbindung mit einem Rumpfbeschlag.

Wie in der Schnittansicht gemäß Figur 6 zu erkennen, ragen die Verbindungsbeschläge 26 nicht über die Oberseite der Adapterplatte 20 heraus. Insbesondere sind auch die Bolzen 27 der Verbindungsbeschläge 26 derart angeordnet, dass ARINC-791-konforme Rumpfbeschläge bei erfolgter Verbindung ebenfalls nicht über die Oberseite der Adapterplatte 20 hinausragen.

Zumindest der linke der beiden im Schnitt in Figur 6 dargestellten Verbindungsbeschläge 26 steht im Übrigen auch nicht über die Unterseite der Adapterplatte 20 hervor. Lediglich der Einsatz 23 ragt mit seinem zur Befestigung des Verbindungsbeschlags 26 daran vorgesehenen Bereich leicht aus der Unterseite der Adapterplatte hervor.

In der Adapterplatte 20 sind weiterhin eine Vielzahl von Befestigungsöffnungen 31 vorgesehen, an denen verschiedene Antennenmodule 3 unterschiedlicher Bauart und Größe befestigt werden können. Aufgrund der Ausgestaltung des Trägerelementes 2 als Adapterplatte 20 ist es sogar grundsätzlich möglich, auch zu einem späteren Zeitpunkt noch weitere Befestigungsöffnungen 31 in die Adapterplatte 20 einzubringen, um auch Antennenmodule 3, die nicht an bereits bestehenden Befestigungsöffnungen 31 befestigt werden können, zu montieren.

Umlaufend am Rand der Adapterplatte 20 sind an dafür vorgesehene Durchgangsbohrungen Winkelelemente 32 aus korrosionsbeständigem Edelstahl zur Befestigung der Radom-Rumpfverkleidung 4 daran angeordnet. Die Winkelelemente 32 sind jeweils individuell aus einem Satz an unterschiedlich dimensionierten und hinsichtlich ihrer Bohrungen ausgestalteten Winkelelementen ausgewählt, um so evtl. Fertigungstoleranzen der Adapterplatte 20 und/oder der Radom-Rumpfverkleidung 4 ausgleichen zu können.

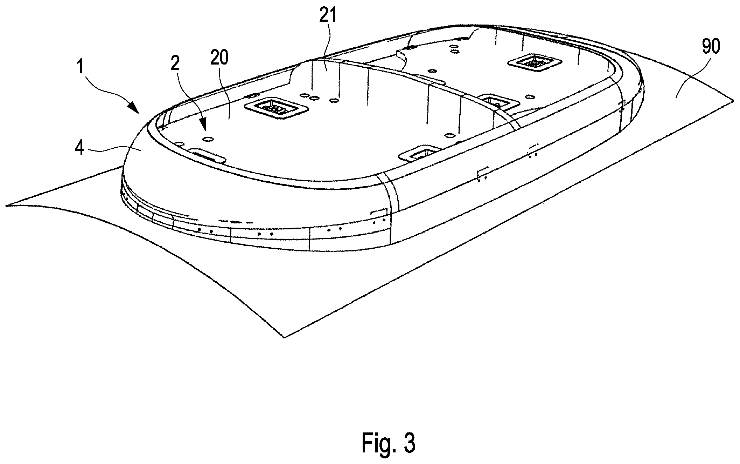

Die Radom-Rumpfverkleidung 4, die in Figur 3 im mit der Adapterplatte 20 verbundenen Zustand gezeigt ist, ist selbstständig formstabil. Dazu ist sie an ihren gegenüberliegenden kurzen Seiten kuppelförmig und in den dazwischenliegenden Bereichen ausreichend gekrümmt ausgestaltet.

Die Radom-Rumpfverkleidung 4 weist eine Öffnung auf, die - nach erfolgter Montage der Antennenmodule 3 - durch die Radom-Abdeckung 5 geschlossen werden kann, sodass sich eine durchgängige Verkleidung, wie sie in Figur 1 dargestellt ist, ergibt. Die Radom-Abdeckung 5 ist nicht selbstständig formstabil, behält ihre Form aber aufgrund der einer entsprechend ausgestalteten Verbindung mit der Radom-Rumpfverkleidung 4 bei. Um aeroelastisches Schwingen oder Flattern der Radom-Abdeckung 5 zu vermeiden oder zumindest stark zu reduzieren, ist das auf der Adapterplatte 20 befestigte Versteifungselement 21 zur Abstützung der Radom-Abdeckung 5 ausgebildet.

Die Radom-Abdeckung 5 ist aus einem für die Wellenlängen der von den Antennenmodulen 3 ausgehenden oder von diesen zu empfangenen elektromagnetischen Strahlung gut durchlässigen Material. Bei der dargestellten Ausführungsform kann die Radom-Abdeckung 5 darüber hinaus eine geringe Dicke aufweisen, was einer geringen Dämpfung zuträglich ist.

Die dargestellte Antennenverkleidung weist eine Länge von 2.815 mm und eine Breite 1.160 mm auf. Die maximale Höhe über der Außenhaut 90 des Flugzeugrumpfs beträgt 216 mm. Damit ist bei einer Anordnung der Antennenverkleidung 1 auf der Oberseite des Rumpfs eines Verkehrsflugzeugs die Gefahr eines Vogelschlags praktisch gleich null, weshalb für die Antennenverkleidung 1 in der Regel kein entsprechender Nachweis geführt werden muss und Vogelschlag bei der Auslegung der Antennenverkleidung 1 aus nicht berücksichtigt werden muss.

## Patentansprüche

1. Antennenverkleidung (1) für Flugzeuge, insbesondere für Verkehrsflugzeuge, zur Befestigung an von der Außenhaut (90) eines Flugzeuges hervorstehenden Rumpfbeschlägen umfassend ein Trägerelement (2) zur Befestigung von Antennenmodulen (3) daran, eine an dem Trägerelement (2) befestigte Radom-Rumpfverkleidung (4) zur Anlage an der Außenhaut (90) des Flugzeugs und eine mit der Radom-Rumpfverkleidung (3) eine durchgängige Verkleidung bildende, für elektromagnetische Strahlung in einem vorgegebenen Wellenlängenbereich durchlässige Radom-Abdeckung (5), wobei das Trägerelement (2) eine Adapterplatte (20) aus Faserverbund ist, welche mit Einsätzen (23) versehene Aussparungen (22) aufweist, wobei in den Einsätzen (23) zur Verbindung mit den Rumpfbeschlägen ausgebildete Verbindungsbeschläge (26) vorgesehen sind, die zwischen der Ober- und Unterseite der Adapterplatte (20) angeordnet und derart ausgebildet sind, dass die Verbindungsbeschläge (26) nicht über die Oberseite der Adapterplatte (20) hinausragen und die Rumpfbeschläge bei Verbindung mit den Verbindungsbeschlägen (26) in die Adapterplatte (20) hinein-, jedoch nicht über deren Oberseite hinausragen, wobei die Radom-Rumpfverkleidung (4) an zwei gegenüberliegenden Enden kuppelförmig und in den dazwischenliegenden Bereichen ausreichend gekrümmt ausgestaltet ist, dass die Radom-Rumpfverkleidung (4) selbstständig formstabil ist,
**dadurch gekennzeichnet, dass**
die Radom-Rumpfverkleidung (4) mit Winkelelementen (32) an der Adapterplatte (20) befestigt ist, wobei jeweils der eine Schenkel eines Winkelelementes (32) mit der Radom-Rumpfverkleidung (4) und der andere Schenkel mit der Adapterplatte (20) verbunden ist.

2. Antennenverkleidung nach Anspruch 1,
**dadurch gekennzeichnet, dass**
zum Ausgleich von Fertigungs- und/oder Montagetoleranzen die einzelnen Winkelelemente (32) jeweils passend aus einem Satz verschieden ausgestalteter Winkelelements (32) ausgewählt und/oder bei der Montage variabel anpassbar sind, vorzugsweise indem Bolzendurchführungsöffnungen erst bei der Montage herzustellen sind.

3. Antennenverkleidung (1) für Flugzeuge, insbesondere für Verkehrsflugzeuge, zur Befestigung an von der Außenhaut (90) eines Flugzeuges hervorstehenden Rumpfbeschlägen umfassend ein Trägerelement (2) zur Befestigung von Antennenmodulen (3) daran, eine an dem Trägerelement (2) befestigte Radom-Rumpfverkleidung (4) zur Anlage an der Außenhaut (90) des Flugzeugs und eine mit der Radom-Rumpfverkleidung (3) eine durchgängige Verkleidung bildende, für elektromagnetische Strahlung in einem vorgegebenen Wellenlängenbereich durchlässige Radom-Abdeckung (5), wobei das Trägerelement (2) eine Adapterplatte (20) aus Faserverbund ist, welche mit Einsätzen (23) versehene Aussparungen (22) aufweist, wobei in den Einsätzen (23) zur Verbindung mit den Rumpfbeschlägen ausgebildete Verbindungsbeschläge (26) vorgesehen sind, die zwischen der Ober- und Unterseite der Adapterplatte (20) angeordnet und derart ausgebildet sind, dass die Verbindungsbeschläge (26) nicht über die Oberseite der Adapterplatte (20) hinausragen und die Rumpfbeschläge bei Verbindung mit den Verbindungsbeschlägen (26) in die Adapterplatte (20) hinein-, jedoch nicht über deren Oberseite hinausragen,
**dadurch gekennzeichnet, dass**
auf der Adapterplatte (20) ein oder mehrere Versteifungselemente (21) angeordnet sind, welche die Adapterplatte (20) versteifen und die Radom-Abdeckung (5) abstützen.

4. Antennenverkleidung nach einem der vorhergehenden Ansprüche,
**dadurch gekennzeichnet, dass**
wenigstens ein Verbindungsbeschlag (26) wenigstens einen Freiheitsgrad gegenüber dem jeweils zugeordneten Rumpfbeschlag in der Ebene der Adapterplatte (22) aufweisen, wobei der wenigstens eine Freiheitsgrad vorzugsweise definiert begrenzt und/oder wahlweise fixierbar ist.

5. Antennenverkleidung nach einem der vorhergehenden Ansprüche,
**dadurch gekennzeichnet, dass**
wenigstens ein Verbindungsbeschlag (26) zur beidseitigen Befestigung eines durch den zugeordneten Rumpfbeschlag hindurchgeführten Bolzen (27) ausgebildet ist, wobei die beidseitige Befestigung vorzugsweise einen Freiheitsgrad in eine Richtung senkrecht zu einem damit fixierten Bolzen (27) in der Ebene der Adapterplatte (20) aufweist.

6. Antennenverkleidung nach einem der vorhergehenden Ansprüche,
**dadurch gekennzeichnet, dass**
wenigstens eine Aussparung (22) und/oder der zur Aufnahme eines Verbindungselementes (26) vorgesehene Freiraum eines Einsatzes (23) rechteckförmig ist.

7. Antennenverkleidung nach einem der vorhergehenden Ansprüche,
**dadurch gekennzeichnet, dass**
die Antennenverkleidung (1) eine Länge von 2,5 bis 3,0 m, vorzugsweise von 2,7, bis 2,9 m, weiter vorzugsweise von 2,8 m und/oder eine Breite von 0,7 bis 1,5 m, vorzugsweise von 0,9 bis 1,3 m, weiter vorzugsweise von 1,1 m, und/oder eine Höhe von weniger als 30 cm, vorzugsweise von weniger als 25 cm, weiter vorzugsweise von weniger als 22 cm aufweist.

8. Antennenverkleidung nach einem der vorhergehenden Ansprüche,
**dadurch gekennzeichnet, dass**
die Positionen der Ausnehmungen (22) und/oder die Ausgestaltung der Verbindungsbeschläge (26) derart gewählt ist, dass sich die Adapterplatte (20) an Rumpfbeschläge entsprechend einer der Normen ARINC 791 oder ARINC 792 befestigen lässt.

9. Antennenverkleidung nach einem der vorhergehenden Ansprüche,
**dadurch gekennzeichnet, dass**
die Adapterplatte (20) eine Faserverbund-Platte in Sandwichbauweise, vorzugsweise mit Kohlenstofffaser-Epoxid-Deckschichten und/oder einem Schaumkern, ist.

10. Antennenverkleidung nach einem der vorhergehenden Ansprüche,
**dadurch gekennzeichnet, dass**
die Einsätze (23), Verbindungsbeschläge (26) und/oder Winkelelemente (32) aus korrosionsbeständigem Edelstahl und/oder durch Bolzen an der Adapterplatte (20) befestigt sind.

## Claims

1. Antenna cladding (1) for aircraft, in particular for commercial aircraft, for attachment to fuselage fittings projecting from the outer skin (90) of an aircraft, comprising a carrier element (2) for attaching antenna modules (3) to the antenna cladding, a radome fuselage cladding (4), which is attached to the carrier element (2), for bearing against the outer skin (90) of the aircraft, and a radome cover (5) which forms a continuous cladding with the radome fuselage cladding (3) and is permeable to electromagnetic radiation in a specified wavelength range, wherein the carrier element (2) is a fibre-composite adapter plate (20) which has cutouts (22) provided with inserts (23), wherein connecting fittings (26) which are designed for connection to the fuselage fittings are provided in the inserts (23) and are arranged between the top side and bottom side of the adapter plate (20) and formed in such a way that the connecting fittings (26) do not project beyond the top side of the adapter plate (20) and, when connected to the connecting fittings (26), the fuselage fittings project into the adapter plate (20), but not beyond its top side, wherein the radome fuselage cladding (4) is configured in the shape of a dome at two opposite ends and so as to be sufficiently curved in the intermediate regions that the radome fuselage cladding (4) is dimensionally stable on its own, **characterized in that**
the radome fuselage cladding (4) is attached to the adapter plate (20) by way of angular elements (32), wherein one limb of an angular element (32) is connected to the radome fuselage cladding (4) and the other limb is connected to the adapter plate (20).

2. Antenna cladding according to Claim 1,
**characterized in that**,
in order to compensate for manufacturing and/or assembly tolerances, the individual angular elements (32) are each suitably selected from a set of angular elements (32) of different configuration and/or can be variably adapted during assembly, preferably by way of bolt feedthrough openings being made only during assembly.

3. Antenna cladding (1) for aircraft, in particular for commercial aircraft, for attachment to fuselage fittings projecting from the outer skin (90) of an aircraft, comprising a carrier element (2) for attaching antenna modules (3) to the antenna cladding, a radome fuselage cladding (4), which is attached to the carrier element (2), for bearing against the outer skin (90) of the aircraft, and a radome cover (5) which forms a continuous cladding with the radome fuselage cladding (3) and is permeable to electromagnetic radiation in a specified wavelength range, wherein the carrier element (2) is a fibre-composite adapter plate (20) which has cutouts (22) provided with inserts (23), wherein connecting fittings (26) which are designed for connection to the fuselage fittings are provided in the inserts (23) and are arranged between the top side and bottom side of the adapter plate (20) and formed in such a way that the connecting fittings (26) do not project beyond the top side of the adapter plate (20) and, when connected to the connecting fittings (26), the fuselage fittings project into the adapter plate (20), but not beyond its top side,
**characterized in that**
one or more reinforcement elements (21), which reinforce the adapter plate (20) and support the radome cover (5), are arranged on the adapter plate (20).

4. Antenna cladding according to any of the preceding claims,
**characterized in that**
at least one connecting fitting (26) has at least one degree of freedom relative to the respectively associated fuselage fitting in the plane of the adapter plate (22), wherein the at least one degree of freedom is preferably limited in a defined manner and/or is selectively fixable.

5. Antenna cladding according to any of the preceding claims,
**characterized in that**
at least one connecting fitting (26) is designed for the attachment of a bolt (27) passed through the associated fuselage fitting on both sides, wherein the attachment on both sides preferably has a degree of freedom in a direction perpendicular to a bolt (27) fixed thereto in the plane of the adapter plate (20).

6. Antenna cladding according to any of the preceding claims,
**characterized in that**
at least one cutout (22) and/or the clearance, which is provided for receiving a connecting element (26), in an insert (23) is rectangular.

7. Antenna cladding according to any of the preceding claims,
**characterized in that**
the antenna cladding (1) has a length of 2.5 to 3.0 m, preferably of 2.7 to 2.9 m, further preferably of 2.8 m and/or a width of 0.7 to 1.5 m, preferably of 0.9 to 1.3 m, further preferably of 1.1 m, and/or a height of less than 30 cm, preferably of less than 25 cm, further preferably of less than 22 cm.

8. Antenna cladding according to any of the preceding claims,
**characterized in that**
the positions of the recesses (22) and/or the design of the connecting fittings (26) are selected in such a way that the adapter plate (20) can be attached to fuselage fittings in accordance with one of the standards ARINC 791 or ARINC 792.

9. Antenna cladding according to any of the preceding claims,
**characterized in that**
the adapter plate (20) is a fibre-composite board of sandwich construction, preferably with carbon fibre epoxy cover layers and/or a foam core.

10. Antenna cladding according to any of the preceding claims,
**characterized in that**
the inserts (23), connecting fittings (26) and/or angular elements (32) are made of corrosion-resistant stainless steel and/or attached to the adapter plate (20) by bolts.

## Revendications

1. Gaine d'antenne (1) pour aéronefs, en particulier pour avions commerciaux, pour la fixation à des raccords de fuselage faisant saillie à partir de l'enveloppe externe (90) d'un aéronef, comprenant un élément de support (2) permettant la fixation de modules d'antenne (3) à celui-ci, une gaine de fuselage de radôme (4) fixée à l'élément de support (2) pour venir en appui sur l'enveloppe externe (90) de l'aéronef, et un revêtement de radôme (5) qui forme une gaine continue avec la gaine de fuselage de radôme (3) et qui est perméable au rayonnement électromagnétique dans une plage de longueurs d'onde prédéterminée, l'élément de support (2) étant une plaque adaptatrice composite à base de fibres (20) qui présente des découpes (22) pourvues d'inserts (23), des raccords de connexion (26) conçus pour être reliés aux raccords de fuselage étant prévus dans les inserts (23), lesdits raccords de connexion étant disposés entre la face supérieure et la face inférieure de la plaque adaptatrice (20) et étant conçus de telle sorte que les raccords de connexion (26) ne font pas saillie au-delà de la face supérieure de la plaque adaptatrice (20), et les raccords de fuselage, lorsqu'ils sont reliés aux raccords de connexion (26), font saillie dans la plaque adaptatrice (20) mais pas au-delà de la face supérieure de celle-ci, la gaine de fuselage de radôme (4) étant réalisée en forme de coupelle à deux extrémités opposées et suffisamment incurvée dans les zones intermédiaires pour que la gaine de fuselage de radôme (4) soit intrinsèquement de forme stable, **caractérisée en ce que**
la gaine de fuselage de radôme (4) est fixée à la plaque adaptatrice (20) par des éléments angulaires (32), l'une des branches d'un élément angulaire (32) étant reliée à la gaine de fuselage de radôme (4) et l'autre branche, à la plaque adaptatrice (20).

2. Gaine d'antenne selon la revendication 1,
**caractérisée en ce que**
pour compenser les tolérances de fabrication et/ou de montage, les éléments angulaires (32) individuels sont respectivement sélectionnés de manière appropriée à partir d'un ensemble d'éléments angulaires (32) de configuration différente et/ou sont ajustables de manière variable lors du montage, de préférence en réalisant des ouvertures de passage de boulons uniquement lors du montage.

3. Gaine d'antenne (1) pour aéronefs, en particulier pour avions commerciaux, pour la fixation à des raccords de fuselage faisant saillie à partir de l'enveloppe externe (90) d'un aéronef, comprenant un élément de support (2) permettant la fixation de modules d'antenne (3) à celui-ci, une gaine de fuselage de radôme (4) fixée à l'élément de support (2) pour venir en appui sur l'enveloppe externe (90) de l'aéronef, et un revêtement de radôme (5) qui forme une gaine continue avec la gaine de fuselage de radôme (3) et qui est perméable au rayonnement électromagnétique dans une plage de longueurs d'onde prédéterminée, l'élément de support (2) étant une plaque adaptatrice composite à base de fibres (20) qui présente des découpes (22) pourvues d'inserts (23), des raccords de connexion (26) conçus pour être reliés aux raccords de fuselage étant prévus dans les inserts (23), lesdits raccords de connexion étant disposés entre la face supérieure et la face inférieure de la plaque adaptatrice (20) et étant conçus de telle sorte que les raccords de connexion (26) ne font pas saillie au-delà de la face supérieure de la plaque adaptatrice (20), et les raccords de fuselage, lorsqu'ils sont reliés aux raccords de connexion (26), font saillie dans la plaque adaptatrice (20) mais pas au-delà de la face supérieure de celle-ci,
**caractérisée en ce que**
un ou plusieurs éléments de raidissement (21) sont disposés sur la plaque adaptatrice (20), lesquels raidissent la plaque adaptatrice (20) et soutiennent le revêtement de radôme (5).

4. Gaine d'antenne selon l'une des revendications précédentes,
**caractérisée en ce que**
au moins un raccord de connexion (26) présente au moins un degré de liberté par rapport au raccord de fuselage respectivement associé dans le plan de la plaque adaptatrice (22), ledit au moins un degré de liberté étant de préférence défini de manière limitée et/ou pouvant être fixé au choix.

5. Gaine d'antenne selon l'une des revendications précédentes,
**caractérisée en ce que**
au moins un raccord de connexion (26) est conçu pour la fixation bilatérale d'un boulon (27) amené à passer à travers le raccord de fuselage associé, la fixation bilatérale présentant de préférence dans le plan de la plaque adaptatrice (20) un degré de liberté dans une direction perpendiculaire à un boulon (27) ainsi fixé.

6. Gaine d'antenne selon l'une des revendications précédentes,
**caractérisée en ce que**
au moins une découpe (22) et/ou l'espace libre d'un insert (23) prévu pour loger un élément de connexion (26) est de forme rectangulaire.

7. Gaine d'antenne selon l'une des revendications précédentes,
**caractérisée en ce que**
la gaine d'antenne (1) présente une longueur de 2,5 à 3,0 m, de préférence de 2,7 à 2,9 m, plus préférablement de 2,8 m et/ou une largeur de 0,7 à 1,5 m, de préférence de 0,9 à 1,3 m, plus préférablement de 1,1 m, et/ou une hauteur inférieure à 30 cm, de préférence inférieure à 25 cm, plus préférablement inférieure à 22 cm.

8. Gaine d'antenne selon l'une des revendications précédentes,
**caractérisée en ce que**
les positions des évidements (22) et/ou la conception des raccords de connexion (26) sont choisies de telle sorte que la plaque adaptatrice (20) puisse être fixée à des raccords de fuselage conformément à l'une des normes ARINC 791 ou ARINC 792.

9. Gaine d'antenne selon l'une des revendications précédentes,
**caractérisée en ce que**
la plaque adaptatrice (20) est une plaque composite à base de fibres à structure en sandwich, présentant de préférence des couches de revêtement d'époxy-fibres de carbone et/ou un noyau en mousse.

10. Gaine d'antenne selon l'une des revendications précédentes,
**caractérisée en ce que**
les inserts (23), les raccords de connexion (26) et/ou les éléments angulaires (32) sont en acier inoxydable résistant à la corrosion et/ou sont fixés à la plaque adaptatrice (20) par des boulons.
